# EUROPEAN PATENT APPLICATION

(11) **EP 2 426 893 A1**
(43) Date of publication of application: **07.03.2012**
(21) Application number: 11178400.5
(22) Date of filing: 23.08.2011
(51) Int. Cl.: H04L 29/08, H04L 29/06

(54) **Roled-based access control method applicable to Iscsi storage subsystem**

(30) Priority: 07.09.2010 TW 099130243
(71) Applicant: OSAN Technology Inc., Neihu Taipei (TW)
(72) Inventor: Hsu, Chin-Hsing, 221 New Taipei City (TW)
(74) Representative: Becker Kurig Straus

(57) **Abstract**

A role-based access control method for a storage subsystem. The storage subsystem includes at least a first iSCSI target node and at least a first virtual storage device attached to the first iSCSI target node. The method includes: assigning a first role so that the first role has an authority to access the first iSCSI target node; assigning a first subject having the first role; and in login, authenticating a name and a password of the first subject to verify that whether the first subject is allowed to access the first iSCSI target node.

## Description

This application claims the benefit of Taiwan application Serial No. 99130243, filed September 7, 2010.

### Technical Field

The disclosure relates in general to a role-based access control method applicable to an iSCSI storage subsystem.

### Background

A RAID storage subsystem is capable of building a logical disk device, and thereby accessed by other computer clients, from one or more physical disk devices. The logical disk device virtualized by a RAID storage subsystem is SCSI protocol compliant.

Further, due to popularization of computer network, the iSCSI protocol is developed to transport SCSI commands over the TCP/IP network. The SAN (storage area network) formed by iSCSI transport has following advantages over other SCSI transport protocols. (1) Building an IP-SAN (Internet protocol SAN) is more easy and cheaper because it's based on existing internet infrastructure. (2) The connection distance is unlimited due to the nature of internet. (3) It is possible for on-line expansion and dynamic distribution of storage properties.

For most of iSCSI storage subsystem, either the IP address and/or the iSCSI initiator name are used for access control. As long as the IP address and/or the iSCSI initiator name are correct, the client may login and access the storage of an iSCSI storage system. However, these iSCSI RAID subsystems are vulnerable to attack because the IP address and the iSCSI initiator name are so easy to be faked. Besides, the access control of storage in an iSCSI storage subsystem has to be improved. If a new client is added, then a mapping relationship of this new client has to be defined, which is troublesome for the current mapping. Further, if a computer is normally login in, then all users allowed to use this computer is allowed to access iSCSI storage system, which means the granularity also has to be improved.

### BRIEF SUMMARY

The disclosure is related to an access control method applicable to an iSCSI storage subsystem. A role-based access control method is introduced to simplify the management and to enforce the security level of the iSCSI storage subsystem.

The disclosure is related to an access control method applicable to an iSCSI storage subsystem. A name and a password of a user are required for a user to access storage space virtualized and provided by the iSCSI storage subsystem.

An example of the present disclosure provides a role-based access control method applicable to a storage subsystem. The storage subsystem includes at least a first iSCSI target node and at least a first virtual storage device attached to the first iSCSI target node. The method includes: assigning a first role so that the first role has an authority to access the first iSCSI target node; assigning a first subject having the first role; and in login, authenticating a name and a password of the first subject to verify that whether the first subject is allowed to access the first iSCSI target node.

### BRIEF DESCRIPTION OF THE DRAWINGS

FIG 1 shows an example of a computer cluster applying an embodiment of the disclosure.

FIG 2 shows an example of adding a new role in the embodiment of the disclosure.

FIG 3 shows an example of accessing new virtual storage devices by the roles in the embodiment of the disclosure.

Common reference numerals are used throughout the drawings and the detailed description to indicate the same elements. The present disclosure will be more apparent from the following detailed description taken in conjunction with the accompanying drawings.

### DETAILED DESCRIPTION OF THE DISCLOSURE

In an embodiment of the disclosure, if an access control method according to the embodiment of the disclosure is applied to an iSCSI RAID storage subsystem, a subject who passes authentication may be allowed to access the virtual storage device assigned by the access control method. The subject may be a user account or an iSCSI initiator name. In login authentication, the system may verify the user name (for example, the user account or the iSCSI initiator name) and the password.

The iSCSI RAID storage subsystem includes one or more iSCSI target nodes. To access one of the iSCSI target nodes, the subject must have an access authority and pass the authentication. The virtual storage device may be attached to the iSCSI target node, as a logical unit of the iSCSI target node. In the iSCSI target node, the attached virtual storage device is assigned with a unique logical unit number (LUN).

A role assignment relationship (which defines the relationship between the roles and the subjects) and an authentication information thereof may be stored in the iSCSI RAID storage subsystem or in a center server. A role may include one or more subjects; and one or more roles may be assigned to the same subject. The access authority to the iSCSI target node is based on the role (i.e. role-based).

A role-based access control is introduced in the embodiment of the disclosure. Different roles are created for different access authority. In other words, the access authority is assigned to the role. One or more roles may be assigned to the same subject. Via the role assignment, the subject has the authority to access the ISCSI target node and its attached virtual storage device(s) in the iSCSI RAID storage subsystem. The access authority is not directly assigned to the user (the subject). On the contrary, the access authority is assigned to the role. The user authority management is not complex and the user is assigned with one or more roles. So, if the subject is assigned with one or more roles, the subject has the access authority. After authentication, the subject may perform access operations.

One of the access control method is illustrated as an example in the following.

In this example, the iSCSI RAID storage subsystem has three iSCSI target nodes N1∼N3; and one or more virtual storage devices may be attached to the iSCSI target nodes. In table 1, the virtual storage devices V1∼V3 are attached to the ISCSI target node N1; the virtual storage device V4 is attached to the iSCSI target node N2; and the virtual storage devices V5~V6 are attached to the iSCSI target node N3. In table 1, the LUN assigned to the virtual storage device are expressed in the parentheses.

**Table 1**

| ISCSI target node | Virtual storage device (LUN) |
|---|---|
| N1 | V1(0), V2(1), V3(2) |
| N2 | V4(0) |
| N3 | V5(0), V6(1) |

If there are five subjects connected to the iSCSI RAID storage subsystem, each subject is assigned with at least one role, as shown in table 2.

**Table 2**

| Role | Subject |
|---|---|
| R1 | S1, S2 |
| R2 | S3, S4 |
| R3 | S5 |

After assignment, the role R1 is allowed to access the iSCSI target node N1; the role R2 is allowed to access the iSCSI target node N2; and the role R3 is allowed to access the iSCSI target node N3, as shown in table 3.

**Table 3**

| Role | Access authority |
|---|---|
| R1 | N1 |
| R2 | N2 |
| R3 | N3 |

If the subject S1 is passed in the authentication, the subject S1 is allowed to access the virtual storage device V1∼V3 attached to the iSCSI target node N1 because the subject S1 is assigned with the role R1. Similarly, if the subjects are passed in the authentication, which virtual storage devices are accessible by the subjects are shown in table 4.

**Table 4**

| Subject | accessible virtual storage device(s) |
|---|---|
| S1 | V1, V2, V3 |
| S2 | V1, V2, V3 |
| S3 | V4 |
| S4 | V4 |
| S5 | V5, V6 |

From the above description, in the embodiment, after a new subject is added, the new subjected is assigned with a corresponding role to access the virtual storage devices. So the assignment is easy.

Further, in the above example, although the subject is assigned with a single role, the disclosure is not limited. For example, the subjected may be assigned with two or more roles. A virtual storage device is not limited to be attached to one iSCSI target node. For example, one virtual storage device may be attached to two or more iSCSI target nodes.

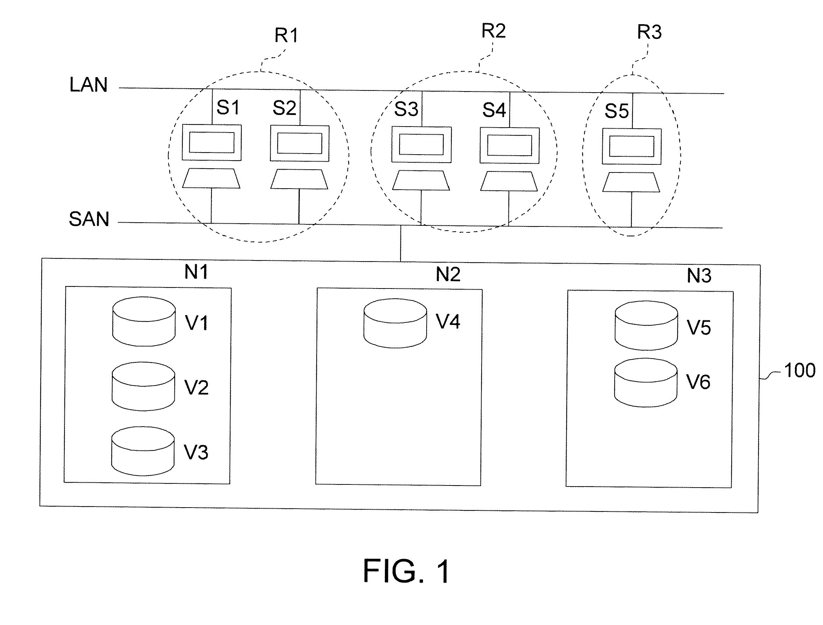

Now to explain the situation that a computer cluster applying the embodiment of the disclosure. FIG 1 shows an example of a computer cluster applying the embodiment of the disclosure. As shown in FIG 1, the roles R1∼R3 are computer clusters. The role R1 includes two subjects S1 and S2; the role R2 includes two subjects S3 and S4; and the role R3 includes a subject S5. In this example, the subject is also referred as a cluster node. The subjects S1∼S5 are connected via LAN.

An iSCSI RAID storage subsystem 100 has three iSCSI target nodes N1∼N3. One or more virtual storage devices may be attached to the iSCSI target node. Virtual storage devices V1∼V3 are attached to the iSCSI target node N1; a virtual storage device V4 is attached to the iSCSI target node N2; and virtual storage devices V5~V6 are attached to the iSCSI target node N3. The role R1 may access the virtual storage devices V1∼V3 attached to the iSCSI target node N1; the role R2 may access the virtual storage device V4 attached to the iSCSI target node N2; and the role R3 may access the virtual storage devices V5~V6 attached to the iSCSI target node N3. The subjects S1∼S5 connects to the virtual storage devices V1∼V6 via SAN (storage area network).

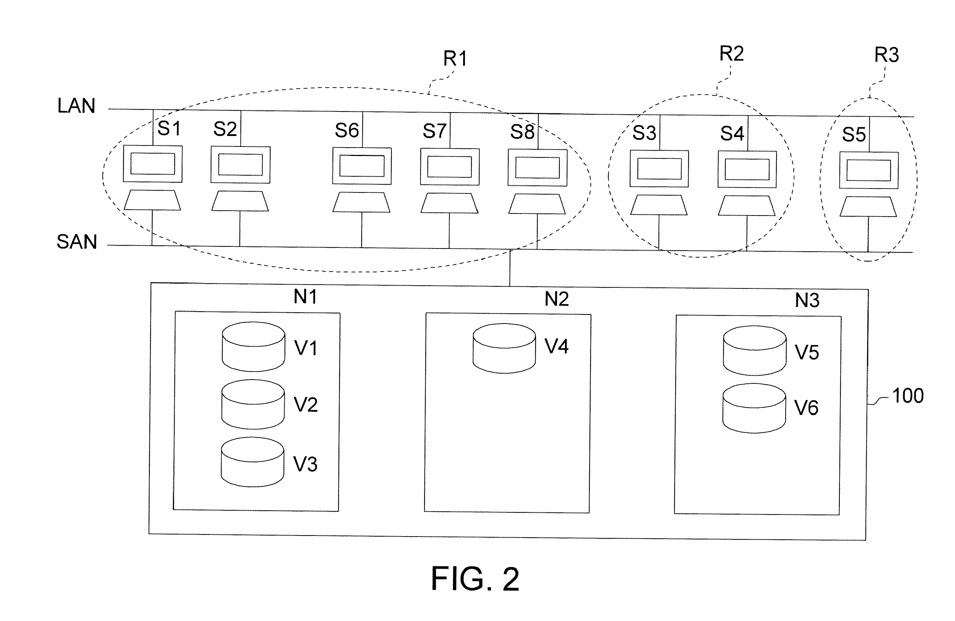

FIG 2 shows an example of adding a new role in the embodiment of the disclosure. Assume that cluster nodes S6∼S8 are added into the computer cluster R1. In the embodiment, this is done by assigning the subjects (i.e. the cluster nodes) S6∼S8 with the role R1. By so, the new subjects S6∼S8 may be allowed to access the iSCSI target node N1 and the virtual storage devices V1∼V3.

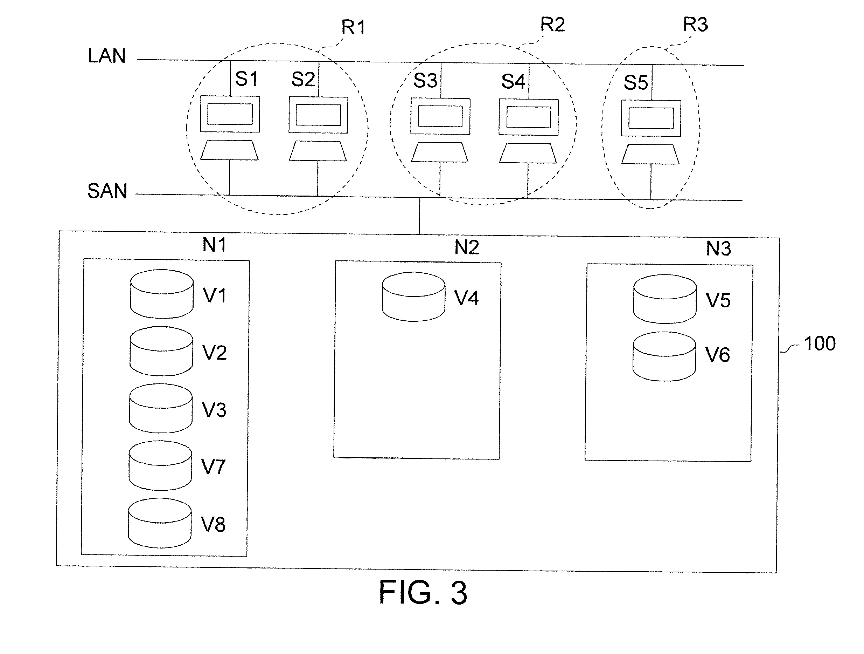

Further, in the embodiment, if a role wants to access more and/or new virtual storage devices, this is done by attaching the new assigned and/or the new added virtual storage devices to the iSCSI target nodes accessible by the role. For example, please refer to FIG 3, which shows an example of accessing new assigned or new added virtual storage devices by role(s) in the embodiment of the disclosure. If the role R1 wants to access the new assigned and/or the new added virtual storage devices V7-V8, this is done by attaching the new assigned and/or the new added virtual storage devices V7~V8 to the iSCSI target node N1 accessible by the role R1.

Besides, in the embodiment, the same virtual storage device may be attached to two or more iSCSI target nodes. For example, please refer to FIG 1 again, if the role R1 wants to access the virtual storage device V4, this is done by attaching the virtual storage device V4 to the iSCSI target node N1 (i.e. the virtual storage device V4 is attached to the iSCSI target nodes N1 and N4 at the same time) and assigning LUN to the virtual storage device V4. By so, the role R1 (i.e. the subjects S1 and S2 in FIG 1) is allowed to access the virtual storage device V4.

Although in the above example, the subject is assigned with a single role. The disclosure is not limited to. For example, a subject may be assigned with two or more roles, as discussed below.

In this example, it is assumed that the iSCSI RAID storage subsystem has three iSCSI target nodes N1∼N3; and one or more virtual storage devices are attached to the iSCSI target node. As shown in table 5, the virtual storage devices V1∼V3 are attached to the iSCSI target node N1; the virtual storage device V4 is attached to the iSCSI target node N2; and the virtual storage devices V5~V6 are attached to the iSCSI target node N3. In table 5, the LUN assigned to the virtual storage device are expressed in the parentheses.

**Table 5**

| iSCSI target node | Virtual storage device (LUN) |
|---|---|
| N1 | V1(0), V2(1), V3(2) |
| N2 | V4(0) |
| N3 | V5(0), V6(1) |

In this example, it is assumed that four subjects connect to the iSCSI RAID storage subsystem and each subject is assigned with at least one role, as shown in table 6. For example, the subject S2 is assigned with the roles R1 and R2.

**Table 6**

| Role | Subject |
|---|---|
| R1 | S1, S2 |
| R2 | S2, S3 |
| R3 | S4 |

After assignment, the role R1 is allowed to access the iSCSI target node N1; the role R2 is allowed to access the iSCSI target node N2; and the role R3 is allowed to access the iSCSI target node N3, as shown in table 7.

**Table 7**

| Role | Access authority |
|---|---|
| R1 | N1 |
| R2 | N2 |
| R3 | N3 |

If the subject S2 passes the authentication, the subject S2 is allowed to access the virtual storage device V1∼V4 attached to the iSCSI target nodes N1 and N2 because the subject S2 is assigned with the roles R1 and R2. Similarly, if the subjects pass the authentication, the virtual storage devices accessible by the subjects are shown in table 8.

**Table 8**

| Subject | accessible virtual storage device(s) |
|---|---|
| S1 | V1, V2, V3 |
| S2 | V1, V2, V3, V4 |
| S3 | V4 |
| S4 | V5, V6 |

## Claims

1. A role-based access control method applicable to a storage subsystem, the storage subsystem including at least a first iSCSI target node and at least a first virtual storage device attached to the first iSCSI target node, the method inc!uding:
assigning a first role so that the first role has an authority to access the first iSCSI target node;
assigning a first subject having the first role; and
in login, authenticating a name and a password of the first subject to verify that whether the first subject is allowed to access the first iSCSI target node.

2. The method according to claim 1, further comprising:
defining a second role having an authority to access a second iSCSI target node of the storage subsystem, wherein at least a second virtual storage device is attached to the second iSCSI target node.

3. The method according to claim 2, further comprising:
assigning the first subject having the second role; and
in login, authenticating the name and the password of the first subject to verify that whether the first subject is allowed to access the second iSCSI target node.

4. The method according to claim 2, further comprising:
if a third virtual storage device is added, attaching the third storage device to either the first iSCSI target node or the second iSCSI target node to allow the first role or the second role to access the third storage device.

5. The method according to claim 2, further comprising:
if a third subject is added, assigning the third subject with either the first role or the second role to allow the third subject to access the first iSCSI target node or the second iSCSI target node.

6. The method according to claim 1, wherein:
a role-subject relationship and an authentication information thereof are stored in the storage subsystem or in a center server.
